# EUROPEAN PATENT SPECIFICATION

(11) **EP 3 476 999 B1**
(45) Date of publication and mention of the grant of the patent: **01.06.2022**
(21) Application number: 17819824.8
(22) Date of filing: 09.06.2017
(51) Int. Cl.: D06N 3/00, B32B 5/24, B32B 27/18, B32B 33/00, D06M 17/00, D06M 17/04

(54) **COMPOSITE SHEET PRODUCT AND METHOD FOR MANUFACTURING SAME**
VERBUNDFOLIENPRODUKT UND VERFAHREN ZUR HERSTELLUNG DAVON
PRODUIT COMPOSITE EN FEUILLE ET SON PROCÉDÉ DE FABRICATION

(30) Priority: 28.06.2016 JP 2016127437
(43) Date of publication of application: 01.05.2019
(73) Proprietor: Toray Industries, Inc., Tokyo 103-8666 (JP)
(72) Inventor: KIMURA, Shunichi, Otsu-shi Shiga 520-8558 (JP); HIROSE, Tomoharu, Osaka-shi Osaka 530-8222 (JP); MATSUZAKI, Yukihiro, Anpachi-gun Gifu 503-2395 (JP)
(74) Representative: Mewburn Ellis LLP
(86) International application number: PCT/JP2017/021428
(87) International publication number: WO 2018/003459

(56) References cited:
- EP-A1- 1 069 232
- EP-A1- 2 868 693
- WO-A1-2014/208685
- WO-A1-2015/093606
- CN-A- 102 359 023
- CN-A- 103 255 640
- JP-A- S56 118 973
- JP-A- S57 161 172
- JP-A- 2007 138 310
- JP-A- 2007 321 280
- JP-A- 2013 227 685
- JP-A- 2013 227 685
- JP-A- 2016 193 503

## Description

### TECHNICAL FIELD

The present invention relates to a composite sheet product and a method for manufacturing the same. More particularly, the present invention relates to a composite sheet product that includes a skin sheet including a nonwoven fabric made of ultrafine fibers and an elastomer impregnated into the nonwoven fabric, and a woven or knitted fabric, and that achieves both high flame-retardant performance and high sticking performance between the skin sheet and the woven or knitted fabric, and a method for manufacturing the same.

### BACKGROUND ART

A sheet product mainly including a nonwoven fabric made of ultrafine fibers and an elastomer has excellent characteristics not found in natural leathers, such as high durability and high uniformity. In particular, the so-called suede-like artificial leather that is obtained by subjecting the surface of the leather to buffing to raise nap of ultrafine fibers is used not only as a material for clothing but also in various fields such as interior materials for vehicles, materials for furniture and interior, and building materials.

In the above-mentioned fields, the suede-like artificial leather is often required to have high flame-retardant performance. However, it is known that elastomers such as polyurethane, and a nonwoven fabric that form an artificial leather, as well as fibers that form a woven or knitted fabric are very difficult to render flame retardant.

For the purpose of rendering these materials flame retardant, halogen flame retardants have often been used in the past. The halogen flame retardants, however, have a problem that they generate a harmful halogen gas during burning, and use of the halogen flame retardants is regulated in recent years.

Therefore, as a method for imparting flame retardancy to an artificial leather, for example, there has been proposed a method in which a resin composition containing an acrylate resin as a main component and also containing an aromatic phosphate and a metal oxide is applied to the back surface of a suede-like artificial leather to render the artificial leather flame retardant (see Patent Document 1). However, in order to obtain stable flame retardancy by this proposal, it is necessary to add a large amount of the flame retardant resin composition. Moreover, the technique has the following problem: in the case where a thick woven or knitted fabric is stuck to the sheet product for the purpose of increasing the strength of the sheet product, the flame retardant resin composition added in a large amount deteriorates the adhesiveness of the back surface of the sheet product to the woven or knitted fabric, and the sheet product and the woven or knitted fabric have insufficient sticking performance.

There has also been proposed a method in which a sheet product and a woven or knitted fabric are integrated by entanglement or adhesion, and then a flame retardant resin is added to the back surface of the sheet to achieve both high strength and flame-retardant performance of the sheet product (see Patent Document 2). This proposal, however, has the following problem: in the case where a thick woven or knitted fabric is stuck to the sheet product in applications such as a sheet for seats for which high strength is required, the flame retardant component added to the back surface of the sheet product does not work effectively during burning on the front surface of the sheet product, so that sufficient flame-retardant performance of the sheet product is not obtained.

WO 2014/208685 A1 concerns a synthetic leather provided with a base material layer comprising a nonwoven fabric or woven-knitted fabric, an adhesive layer layered on the base material layer, and an epidermal layer layered on the adhesive layer, the adhesive layer containing 17 g/m² to 90 g/m² inclusive of flame retardant, the glass transition temperature (Tg) of a resin constituting the adhesive layer being -20 °C or less.

### PRIOR ART DOCUMENTS

### PATENT DOCUMENTS

Patent Document 1: Japanese Patent No. 4065729
Patent Document 2: Japanese Patent Laid-open Publication No. 2013-227685

### SUMMARY OF THE INVENTION

### PROBLEMS TO BE SOLVED BY THE INVENTION

It is therefore an object of the present invention to provide a composite sheet product that includes a skin sheet including a nonwoven fabric made of ultrafine fibers and an elastomer impregnated into the nonwoven fabric, and a woven or knitted fabric, and that achieves both high flame-retardant performance and high sticking performance between the skin sheet and the woven or knitted fabric, and a method for manufacturing the same.

### SOLUTIONS TO THE PROBLEMS

The present invention is intended to solve the above-mentioned problems. The composite sheet product of the present invention is the composite sheet product according to claim 1. It is characterized by: a skin sheet including ultrafine fibers having an average fiber diameter of 0.1 to 10 µm and an elastomer, and a woven or knitted fabric, and the skin sheet and the woven or knitted fabric are laminated on each other with a resin layer containing a flame retardant and an adhesive layer interposed therebetween.

According to a preferred aspect of the composite sheet product of the present invention, the woven or knitted fabric has nap or ruggedness on a surface thereof that is in contact with the adhesive layer.

According to a preferred aspect of the composite sheet product of the present invention, the flame retardant is a phosphorus and/or inorganic flame retardant.

According to a preferred aspect of the composite sheet product of the present invention, an adhesive in the adhesive layer is a thermoplastic resin having a softening temperature of 70 to 160°C.

According to a preferred aspect of the composite sheet product of the present invention, the thermoplastic resin is a nylon resin.

The method for manufacturing a composite sheet product of the present invention is the method according to claim 6. It comprises the following steps 1 to 3:
1. adding a resin containing a flame retardant to a skin sheet including ultrafine fibers having an average fiber diameter of 0.1 to 10 µm and an elastomer;
2. imparting nap or ruggedness to at least one surface of a woven or knitted fabric; and
3. sticking, with an adhesive, a surface of the skin sheet obtained in step 1, the surface having the resin containing the flame retardant, to the surface of the woven or knitted fabric obtained in step 2, the surface having nap or ruggedness.

### EFFECTS OF THE INVENTION

According to the present invention, it is possible to provide a composite sheet product that achieves both high flame-retardant performance suitable for use in vehicle interiors and high sticking performance between the skin sheet and the woven or knitted fabric, that does not generate any toxic gas during burning, and that has a dense and soft touch.

### EMBODIMENT OF THE INVENTION

The composite sheet product of the present invention is a composite sheet product including: a skin sheet including ultrafine fibers having an average fiber diameter of 0.1 to 10 µm and an elastomer, and a woven or knitted fabric, and the skin sheet and the woven or knitted fabric are laminated on each other with a resin layer containing a flame retardant and an adhesive layer interposed therebetween.

As for the kind of the ultrafine fibers that constitute the skin sheet, for example, natural fibers, regenerated fibers, semisynthetic fibers, and synthetic fibers can be used. In particular, synthetic fibers are preferable, and polyester fibers are particularly preferably used from the viewpoint of excellent durability, particularly mechanical strength, heat resistance, and light resistance.

In the case where synthetic fibers are used as the ultrafine fibers, the polymer forming the ultrafine fibers may contain inorganic particles such as titanium oxide particles, a lubricant, a pigment, a thermal stabilizer, an ultraviolet absorber, a conductive agent, a heat storage agent, an antimicrobial agent in accordance with various purposes.

It is important that the ultrafine fibers have an average fiber diameter of 0.1 to 10 µm. Ultrafine fibers having an average fiber diameter of 10 µm or less provide a sheet product that is dense, has a soft touch, and has an excellent surface appearance. Meanwhile, ultrafine fibers having an average fiber diameter of 0.1 µm or more exert excellent effects on coloring properties and fastness after dyeing. The average fiber diameter of the ultrafine fibers is preferably 1 µm or more and 6 µm or less, more preferably 1.5 µm or more and 4 µm or less.

In a preferred aspect, the cross-sectional shape of the ultrafine fibers is circular from the viewpoint of processing operability. It is also possible to employ ultrafine fibers having an irregular cross-sectional shape such as an ellipse, a flatness, polygons such as a triangle, a fan shape, a cross shape, a hollow shape, a Y-shape, a T-shape, and a U-shape.

In a preferred aspect, the ultrafine fibers are in the form of a nonwoven fabric (sometimes referred to as an ultrafine fiber web) in the sheet product. A nonwoven fabric can provide an appearance and a touch that are uniform and elegant when the surface of the nonwoven fabric is napped.

The form of the nonwoven fabric may be either a filament fiber nonwoven fabric or a staple fiber nonwoven fabric. The form is preferably a staple fiber nonwoven fabric since the nonwoven fabric easily gives an elegant appearance.

The average fiber length of the ultrafine fibers in the case where a staple fiber nonwoven fabric is used is preferably 25 to 90 mm. An average fiber length of 90 mm or less provides a good appearance and a good touch, and an average fiber length of 25 mm or more provides a sheet product excellent in abrasion resistance. The average fiber length is more preferably 35 to 80 mm, still more preferably 40 to 70 mm.

The elastomer that constitutes the skin sheet used in the present invention is a binder that holds the ultrafine fibers that constitute the skin sheet. Therefore, in consideration of the soft touch of the composite sheet product of the present invention, the elastomer may be polyurethane, SBR, NBR, an acrylic resin. In particular, in a preferred aspect, the elastomer contains polyurethane as a main component. Use of polyurethane provides a composite sheet product having a rich tactile sensation, a leather-like appearance, and physical properties enough to endure actual use. In addition, the "main component" as used herein means that the mass of polyurethane is more than 50% by mass based on the mass of the whole elastomer.

In the case where polyurethane is used in the present invention, either organic solvent-based polyurethane used in the state of being dissolved in an organic solvent or water-dispersible polyurethane used in the state of being dispersed in water can be used. The polyurethane used is preferably polyurethane obtained by a reaction of a polymer diol, an organic diisocyanate, and a chain extender.

In the case where water-dispersible polyurethane is used in the present invention, it is preferable to use an internal emulsifier to disperse the polyurethane in water. Examples of the internal emulsifier include cationic internal emulsifiers such as quaternary amine salts, anionic internal emulsifiers such as sulfonates and carboxylates, and nonionic internal emulsifiers such as polyethylene glycol. Moreover, both a combination of cationic and nonionic internal emulsifiers and a combination of anionic and nonionic internal emulsifiers can be used.

The elastomer may contain various additives including pigments such as carbon black; flame retardants such as phosphorus, halogen, and inorganic flame retardants; antioxidants such as phenolic, sulfur, and phosphorus antioxidants; ultraviolet absorbers such as benzotriazole, benzophenone, salicylate, cyanoacrylate, and oxalic acid anilide ultraviolet absorbers; light stabilizers such as hindered amine and benzoate light stabilizers; hydrolysis stabilizers such as polycarbodiimide; plasticizers; antistatic agents; surfactants; coagulation modifiers; and dyes.

The content of the elastomer in the skin sheet can be appropriately adjusted in consideration of the kind of the elastomer used, the method for manufacturing the elastomer, and the touch and physical properties. The content of the elastomer is preferably 10% by mass or more and 60% by mass or less, more preferably 15% by mass or more and 45% by mass or less, still more preferably 20% by mass or more and 30% by mass or less based on the mass of the skin sheet. If the content of the elastomer is less than 10% by mass, the bond between the fibers due to the elastomer is weak, and the skin sheet tends to be poor in abrasion resistance. Meanwhile, if the content of the elastomer exceeds 60% by mass, the skin sheet tends to have a hard touch.

The thickness of the skin sheet is preferably 0.2 to 1 mm, more preferably 0.3 to 0.9 mm, still more preferably 0.4 to 0.8 mm. If the thickness of the skin sheet is less than 0.2 mm, the skin sheet is poor in workability at the time of manufacture and sticking with a woven or knitted fabric described later. If the thickness exceeds 1 mm, the flexibility of the composite sheet product tends to be impaired.

In a preferred aspect, the skin sheet that constitutes the composite sheet product of the present invention has nap on the surface thereof. As for the form of nap in the case where the skin sheet has nap on the surface thereof, the nap preferably has a length and direction flexibility to such an extent that traces remain when the skin sheet is stroked with a finger, that is, a so-called finger mark remain due to the change of direction of the nap from the viewpoint of design effects.

As for the kind of the woven or knitted fabric used in the present invention, it is possible to use any of various kinds of knitted fabrics such as warp knitted fabrics typified by tricot knitted fabrics and weft knitted fabrics, lace knitted fabrics, and knitted fabrics based on these knitting methods, and various kinds of woven fabrics such as plain weave fabrics, twill weave fabrics, satin weave fabrics, and woven fabrics based on these weaving methods. In a preferred aspect, a knitted fabric having high air permeability and high stretchability is used.

As for the kind of the yarn that constitutes the woven or knitted fabric, for example, a filament yarn, a spun yarn, or a blended yarn of a filament yarn and short fibers can be used.

The density of the woven or knitted fabric is preferably 0.3 to 0.6 g/cm³, more preferably 0.4 to 0.55 g/cm³. If the density of the woven or knitted fabric is less than 0.3 g/cm³, the woven or knitted fabric is insufficient in strength against compression in the thickness direction. If the density exceeds 0.6 g/cm³, the air permeability of the whole composite sheet product tends to decrease.

The thickness of the woven or knitted fabric is preferably 0.1 to 2 mm, more preferably 0.3 to 1.5 mm, still more preferably 0.4 to 1 mm. If the thickness of the woven or knitted fabric is less than 0.1 mm, the woven or knitted fabric is poor in workability at the time of sticking with the skin sheet. If the thickness exceeds 2 mm, the flexibility of the composite sheet product tends to be impaired.

In a preferred aspect, the woven or knitted fabric used in the composite sheet product of the present invention has nap on a surface thereof to be stuck to the skin sheet. In the case where the woven or knitted fabric has nap, when the woven or knitted fabric is laminated on the skin sheet with an adhesive layer described later interposed therebetween, the nap enters the inside of the adhesive layer to significantly enhance the adhesiveness between the skin sheet and the woven or knitted fabric.

As for the form of nap in the case where the woven or knitted fabric has nap on the surface thereof, the nap length of the woven or knitted fabric is preferably 300 µm or less, more preferably 200 µm or less, because too long a nap length hinders uniform addition of the adhesive and lowers the adhesiveness with the skin sheet. In addition, if the nap length is too short, the anchor effect caused by the nap embedded in the adhesive is weakened, so that the nap length is preferably 10 µm or more, more preferably 50 µm or more.

In the case where the woven or knitted fabric has ruggedness on a surface thereof, as for the form of the ruggedness, the difference in height between the recessed portion and the convex portion is preferably 150 µm or less, more preferably 100 µm or less, because too large a difference may impair the smoothness of the surface of the composite sheet. In addition, if the difference in height is too small, the anchor effect caused by the convex portion embedded in the adhesive is weakened, so that the difference in height between the recessed portion and the convex portion is preferably 10 µm or more, more preferably 50 µm or more.

The composite sheet product of the present invention includes a resin layer containing a flame retardant and an adhesive layer interposed between the skin sheet and the woven or knitted fabric.

As for the kind of the flame retardant used in the present invention, a phosphorus and/or inorganic flame retardant that does not generate any harmful substance during burning is preferably used.

Examples of the phosphorus flame retardant include polyphosphate type flame retardants such as ammonium polyphosphate (for example, Exflam APP204 (manufactured by Wellchem) and Exolit AP462 (manufactured by Clariant)), nitrogen-containing organic phosphate type flame retardants such as guanidine phosphate (for example, Vigol No. 415 (manufactured by DAIKYO CHEMICAL CO., LTD.)), and aromatic phosphate ester type flame retardants such as triphenyl phosphate and trixylenyl phosphate (for example, TPP (manufactured by Daihachi Kogyo Co., Ltd.)). Examples of the inorganic flame retardant include known flame retardants such as aluminum hydroxide, titanium oxide, zinc oxide, expandable graphite, magnesium hydroxide, calcium carbonate, zinc borate, ammonium polyphosphate, and red phosphorus. It is preferable to use a polyphosphate type flame retardant excellent in workability and durability.

The percentage of the flame retardant component in the flame retardant-containing resin is preferably 50 to 95% by mass, more preferably 60 to 90% by mass. If the percentage of the flame retardant component is less than 50% by mass, it means that a large amount of a flame-retarding agent is added to the composite sheet product, which tends to be disadvantageous from the viewpoint of economy. Meanwhile, if the percentage of the flame retardant component exceeds 95% by mass, the composite sheet product tends to be poor in form stability.

In a preferred aspect, the flame retardant-containing resin in the present invention contains a binder-resin in addition to the flame retardant. Examples of the binder-resin include an acrylic resin, a urethane resin, a polyester resin, and a vinyl acetate resin. In particular, an acrylic resin is preferably used from the viewpoint of adhesiveness and heat resistance.

The percentage of the binder-resin in the flame retardant-containing resin is preferably in the range of 5 to 50% by mass, more preferably 10 to 40% by mass. If the percentage of the binder-resin is less than 5% by mass, the flame retardant component tends to be easily separated from the sheet. Meanwhile, if the percentage of the binder-resin exceeds 50% by mass, the touch of the composite sheet product tends to be impaired.

To the flame retardant-containing resin, a thickener for improving the temporal stability and production workability, and a softener such as liquid paraffin and polyethylene glycol can be added.

Examples of the usable thickener include polyvinyl alcohol, methyl cellulose, carboxymethyl cellulose, an alkali-thickening type acrylic resin, and an ethylene oxide higher fatty acid ester.

In the case where a phosphorus flame retardant is used as the flame retardant, a flame retardant aid such as aluminum hydroxide, magnesium hydroxide, and a metal oxide can also be used.

The amount of the flame retardant-containing resin to be added is preferably 10 to 40% by mass, more preferably 15 to 30% by mass in terms of dry mass (mass of the solid content) based on the mass of the skin sheet in order to exhibit satisfactory flame retardancy without impairing the soft touch of the composite sheet product.

Examples of the adhesive include thermoplastic resins such as a polyester resin, a copolymerized polyester resin, a nylon resin, and an acrylic resin, and moisture-curable resins such as a silicone rubber, a polystyrene rubber, and a polyurethane resin. A thermoplastic resin excellent in workability is preferably used and, in particular, a nylon resin excellent in hydrolysis resistance is preferably used.

The thickness of the adhesive layer is preferably 1 to 100 µm in order to achieve sufficient sticking performance and not to impair the soft touch of the composite sheet product.

In the case where a thermoplastic resin is used as the adhesive, the softening temperature of the thermoplastic resin is preferably 70 to 160°C, more preferably 80 to 120°C. If the softening temperature is lower than 70°C, the thermoplastic resin may be softened during the processing or actual use. If the softening temperature is higher than 160°C, the touch of the skin sheet may be impaired by the softening treatment at the time of sticking.

In the following, a method for manufacturing a composite sheet product of the present invention will be described.

The method for manufacturing a composite sheet product of the present invention includes the following steps 1 to 3:
1. adding a resin containing a flame retardant to a skin sheet including ultrafine fibers having an average fiber diameter of 0.1 to 10 µm and an elastomer;
2. imparting nap or ruggedness to at least one surface of a woven or knitted fabric; and
3. sticking, with an adhesive, a surface of the skin sheet obtained in step 1, the surface having the resin containing the flame retardant, to the surface of the woven or knitted fabric obtained in step 2, the surface having nap or ruggedness.

The method for manufacturing a composite sheet product of the present invention is capable of providing a composite sheet having both high flame-retardant performance and sticking performance between the skin sheet and the woven or knitted fabric since the method includes the above-mentioned steps 1 to 3.

First, step 1 will be described.

In step 1, a resin containing a flame retardant is added to a skin sheet including ultrafine fibers having an average fiber diameter of 0.1 to 10 µm and an elastomer.

In a preferred aspect of the present invention, as a means for obtaining the ultrafine fibers that constitute the skin sheet, ultrafine fiber-generating fibers are used. A nonwoven fabric including ultrafine fiber bundles entangled with one another can be obtained by preliminarily entangling ultrafine fiber-generating fibers to form a nonwoven fabric, and then making the fibers ultrafine.

The ultrafine fiber-generating fibers may be islands-in-the-sea fibers that are produced from two thermoplastic resins different in solubility in a solvent as a sea component and an island component, and that are produced by dissolving and removing the sea component using a solvent to allow the remaining island component to form ultrafine fibers; or splittable type composite fibers that are produced by alternately disposing two thermoplastic resins radially or in layers in the cross-section of the fiber, and splitting and separating the components to form ultrafine fibers.

In particular, the islands-in-the-sea fibers are preferably used from the viewpoint of the touch and surface appearance of the sheet product since moderate voids can be produced between the islands, that is, between the ultrafine fibers inside the fiber bundles by removal of the sea component.

For the islands-in-the-sea fibers, is it possible to use a system with a polymer cross-array, in which two components of a sea component and an island component are arrayed and spun using an islands-in-the-sea composite spinneret, and a blend spinning system in which a blend of two components of a sea component and an island component is spun. Islands-in-the-sea fibers obtained by a system in which a polymer cross-array is used are preferably employed from the viewpoint that ultrafine fibers having a uniform monofilament fineness can be obtained.

The form of the nonwoven fabric may be either of a staple fiber nonwoven fabric and a filament fiber nonwoven fabric. In the case of a staple fiber nonwoven fabric, the number of fibers oriented in the thickness direction of the sheet product is larger than that of a filament fiber nonwoven fabric, and the surface of the sheet product, when napped, has a high degree of dense feeling.

In the case where a staple fiber nonwoven fabric is to be obtained as a nonwoven fabric, preferably, the obtained ultrafine fiber-generating fibers are subjected to crimping, and cut into a predetermined length to give raw staple fiber. The ultrafine fiber-generating fibers can be subjected to crimping and cutting by a known method.

Then, the obtained raw staple fiber is made into a fiber web using a cross lapper and entangled tc give a nonwoven fabric. The method of entangling the fiber web to give a nonwoven fabric may be needle punching, water jet punching.

In a preferred aspect, the nonwoven fabric is subjected to heat shrink treatment by warm water or steam treatment in order to improve the dense feeling of the fibers.

Then, the nonwoven fabric may be impregnated with an aqueous solution of a water-soluble resin and dried to add the water-soluble resin to the nonwoven fabric. Adding the water-soluble resin to the nonwoven fabric fixes the fibers and improves the dimensional stability.

Then, the obtained nonwoven fabric is treated with a solvent to generate ultrafine fibers having an average fiber diameter of 0.1 to 10 µm.

The ultrafine fibers can be generated by immersing the nonwoven fabric made of islands-in-the-sea fibers in a solvent to dissolve and remove the sea component.

In the case where the ultrafine fiber-generating fibers are islands-in-the-sea fibers, the solvent used for dissolving and removing the sea component may be, in the case where the sea component is polyethylene, polypropylene, or polystyrene, an organic solvent such as toluene or trichlorethylene. In the case where the sea component is a copolymerized polyester or polylactic acid, an aqueous alkaline solution of sodium hydroxide can be used. In addition, in the case where the sea component is a water-soluble thermoplastic polyvinyl alcohol resin, hot water can be used.

Then, the nonwoven fabric is impregnated with a solvent solution of an elastomer and the solution is solidified to add the elastomer to the nonwoven fabric. The method of fixing the elastomer to the nonwoven fabric may be a method of impregnating a solution of the elastomer into a sheet (nonwoven fabric) and subjecting the resultant to wet coagulation or dry coagulation, and the method can be appropriately selected according to the kind of the used elastomer.

The sheet product to which the elastomer is added can be half-cut in the thickness direction. The sheet product to which the elastomer is added may or may not be half-cut in the thickness direction, but is preferably half-cut from the viewpoint of production efficiency.

A surface of the sheet product or half-cut sheet product to which the elastomer is added may be subjected to napping treatment. The napping treatment can be performed by grinding the surface using sandpaper or a roll sander.

In the case where the sheet product is subjected to the napping treatment, a lubricant such as a silicone emulsion can be added before the napping treatment. In addition, in a preferred aspect, an antistatic agent is added to the sheet product before the napping treatment, because the grinding powder generated from the sheet product by grinding is less likely to accumulate on the sandpaper.

The skin sheet can be subjected to dyeing treatment as necessary. Examples of the dyeing treatment include jet dyeing treatment using a jigger dyeing machine or a jet dyeing machine, dip dyeing treatment such as thermosol dyeing treatment using a continuous dyeing machine, and printing treatment to the napped surface, such as roller printing, screen printing, inkjet printing, sublimation printing, and vacuum sublimation printing. In particular, a jet dyeing machine is preferably used from the viewpoint of quality and appearance, for example, from the viewpoint of obtaining a soft touch. If necessary, the skin sheet may be subjected to various kinds of resin finishing after the dyeing.

Further, designability can be imparted to a surface of the skin sheet as necessary. For example, the skin sheet may be subjected to post processing including boring such as perforation, embossing, laser processing, pin-sonic processing, and printing processing.

Examples of the method of adding a flame retardant-containing resin to the skin sheet include a method of adding the resin using a device such as a rotary screen, a knife roll coater, a gravure roll coater, a kiss roll coater, or a calender coater.

The flame retardant-containing resin, after being added, forms a layer outside the skin sheet while penetrating into the skin sheet. The thickness of the outer layer of the skin sheet is preferably 1 to 100 µm in order not to impair the soft touch of the composite sheet product.

The drying method of drying the added flame retardant-containing resin may be a method in which a known dryer such as a tenter dryer is used.

Then, step 2 will be described. In step 2, at least one surface of a woven or knitted fabric is subjected to napping treatment, or ruggedness is imparted to at least one surface of a woven or knitted fabric.

In the case where at least one surface of a woven or knitted fabric is subjected to napping treatment, the napping treatment can be performed, for example, by a method of grinding the surface using sandpaper, a roll sander.

In the case where ruggedness is imparted to at least one surface of a woven or knitted fabric, the ruggedness can be imparted, for example, by pressing with an embossing roll.

Then, step 3 will be described. In step 3, a surface of the skin sheet obtained in step 1, the surface having the resin containing the flame retardant, is stuck with an adhesive to the surface of the woven or knitted fabric obtained in step 2, the surface having nap or ruggedness.

The adhesive may be added either to the back surface of the skin sheet, that is, the surface of the skin sheet to which the flame retardant is applied, or to the surface of the woven or knitted fabric having nap or ruggedness. From the viewpoint of processing stability, the adhesive is preferably added to the surface of the woven or knitted fabric having nap or ruggedness.

Examples of the method of adding the adhesive include a method of applying a predetermined amount of the adhesive using a device such as a rotary screen, a knife roll coater, a gravure roll coater, a kiss roll coater, or a calender coater. In particular, it is preferable to form a discontinuous adhesive layer using a rotary screen or a gravure roll coater because the composite sheet product may have a good touch. Forming a discontinuous adhesive layer can prevent the curing of the composite sheet product.

The discontinuous adhesive layer means an adhesive layer including both a portion where an adhesive is present and a portion where an adhesive is absent with respect to an adhesion surface, that is, a horizontal surface of the woven or knitted fabric or skin sheet. For example, the discontinuous adhesive layer means an adhesive layer in which the adhesive is arranged in a dot pattern. In the case where the adhesive is arranged in a dot pattern, the size of the dot is preferably such that the diameter of the circumscribed circle of the dot is 100 µm or more and 1000 µm or less, and the number of dots is preferably 10 or more and 200 or less per 1 cm² in order not to impair the soft touch of the sheet product and to ensure sufficient adhesive force.

In the case where a thermoplastic resin is used as the adhesive, the adhesion between the skin sheet and the woven or knitted fabric can be achieved, preferably after the addition of the thermoplastic resin, by joining the back surface of the skin sheet, that is, the surface to which the flame retardant is applied, with the surface of the woven or knitted fabric having nap or ruggedness, and then thermocompression bonding the skin sheet with the woven or knitted fabric.

For the thermocompression bonding, a method such as heat rolls can be used. In the case where heat rolls are used, it is preferable to set the temperature of the heat roll on the woven or knitted fabric side higher than the temperature of the heat roll on the skin sheet side.

The roll temperature on the woven or knitted fabric side in thermocompression bonding with heat rolls is preferably 100 to 180°C, more preferably 120 to 160°C. If the roll temperature on the woven or knitted fabric side is lower than 100°C, adhesion takes time, and a large load is imposed on the process. If the roll temperature on the woven or knitted fabric side is higher than 180°C, the composite sheet product has a coarse touch.

Meanwhile, the roll temperature on the skin sheet side is preferably set to 100°C or lower so as not to impair the appearance of the skin sheet.

The composite sheet product of the present invention has both high flame-retardant performance and sticking performance between the skin sheet and the woven or knitted fabric, and can be used not only as a material for clothing but also in various fields such as interior materials for vehicles, materials for furniture and interior, and building materials. In particular, the composite sheet product is suitably used in interior materials for vehicles that are required to have high strength and flame-retardant performance.

### EXAMPLES

In the following, the composite sheet product of the present invention and a method for manufacturing the same will be described with reference to examples. The physical properties were evaluated as follows.

### <Evaluation methods>

### (1) Average fiber diameter

The average fiber diameter was obtained by taking a scanning electron microscope (SEM) photograph of a cross-section of a skin sheet, randomly selecting 100 fibers having a circular shape or an elliptical shape close to a circular shape, measuring the fiber diameters of the fibers, and calculating the average of the 100 fiber diameters. In the case where ultrafine fibers having an irregular cross-section were used, first, the cross-sectional area of the fiber was measured, and the diameter of a hypothetical circle on the assumption that the cross-section was circular was calculated to obtain the diameter of the monofilament.

### (2) Softening point of thermoplastic resin

The softening point was measured according to JIS K 6863 (1994, Testing methods for the softening point of hot melt adhesives).

### (3) Flame-retardant performance test

The horizontal burning rate was measured according to Flammability test for motor vehicle interiors of FMVSS (Federal Motor Vehicle Safety Standards) No. 302, and the flame-retardant performance was evaluated according to the following judgment criteria.
- In the case where the flame self-extinguished before reaching the gauge line A, the judgment classification was "self-extinguished before gauge line A", and the composite sheet product was judged as acceptable.
- In the case where the flame self-extinguished after the gauge line A, and the burning distance was within 50 mm and the burning time was within 60 seconds, the judgment classification was "self-extinguished", and the composite sheet product was judged as acceptable.
- In the case where the flame did not self-extinguish but the burning rate between the gauge lines was 4 inches/min (about 101.6 mm/min) or less, the judgment classification was "burning at rate not more than specified rate", and the composite sheet product was judged as acceptable.
- In the case where the flame did not self-extinguish and the burning rate between the gauge lines exceeded 4 inches/min (about 101.6 mm/min), the judgment classification was "burning at rate exceeding specified rate", and the composite sheet product was judged as rejectable.

### (4) Presence or absence of toxic gas generation during burning

The gas generated during the above-mentioned test (3) was collected using a gas sampler GV-100 manufactured by GASTEC CORPORATION, and measured using a detection tube for unknown gas qualification Polytec No. 107 also manufactured by GASTEC CORPORATION. If any toxic gas was detected at a level not less than the detection criteria, it was determined that a toxic gas was generated.

### (5) Peel strength between skin sheet and woven or knitted fabric

From one end of a composite sheet product sample having a length of 200 mm and a width of 20 mm, the skin sheet was peeled by 50 mm, and an end of the peeled skin sheet and an end of the woven or knitted fabric were individually attached to a grip tool of a tensile testing machine. The skin sheet and the woven or knitted fabric were continuously peeled from each other at a tensile speed of 100 mm/min in the direction of 180°. The average of the strength (N) from the start of peeling until the skin sheet and the woven or knitted fabric were completely separated from each other was calculated as the peel strength. The peel strength was measured five times, and the average thereof was taken as the peel strength of the composite sheet product.

### (6) External appearance of composite sheet product

The external appearance of a composite sheet product was evaluated by visual observation and sensory evaluation as good, fair, or poor as described below by a total of 20 evaluators, that is, 10 healthy adult males and 10 healthy adult females, and the most frequent evaluation result was adopted as the external appearance. In the present invention, "good" and "fair" are at a satisfactory level.
Good: The fibers are well dispersed and have a high degree of dense feeling.
Fair: Although the fibers are well dispersed, they have a slightly low level of dense feeling.
Poor: The fibers are generally very poorly dispersed, and have a low level of dense feeling.

### (7) Touch of composite sheet product

The touch of a composite sheet product was evaluated by sensory evaluation as good, fair, or poor as described below by a total of 20 evaluators, that is, 10 healthy adult males and 10 healthy adult females, and the most frequent evaluation result was adopted as the touch. In the present invention, "good" and "fair" are at a satisfactory level.
Good: The composite sheet product has an intense repulsive feeling and high flexibility.
Fair: The composite sheet product has an intense repulsive feeling but is slightly poor in flexibility.
Poor: The composite sheet product has no repulsive feeling, and is paper-like and hard.

### <Notation of chemical substances>

- PU: Polyurethane
- DMF: N,N-dimethylformamide
- PET: polyethylene terephthalate
- PVA: polyvinyl alcohol

### [Example 1]

### <Production of skin sheet>

Using polyethylene terephthalate (PET) having an intrinsic viscosity (IV) of 0.718 as an island component, polystyrene having an MFR of 18 as a sea component, and an islands-in-the-sea composite spinneret having a number of islands of 16 islands/hole, and at a spinning temperature of 285°C and at an island component/sea component mass ratio of 55/45, the components were melt-spun and then stretched. Using a push-fit crimping machine, the product was subjected to crimping treatment, and then cut into a length of 51 mm to give raw staple fiber of islands-in-the-sea fibers having a monofilament fineness of 3.0 dtex.

Using the raw staple fiber obtained as described above, a laminated fiber web was formed through carding and cross lapper steps, and the fiber web was subjected to needle punching with a number of punches of 2400/cm² to give an entangled sheet (felt) having a thickness of 2.9 mm and a density of 0.21 g/cm³.

The entangled sheet obtained as described above was shrunk with hot water at a temperature of 96°C, and then impregnated with a 12% by mass aqueous PVA solution having a saponification degree of 88%. The sheet was squeezed at a target amount of the solid content to the fiber component of 30% by mass, and dried with hot air at a temperature of 140°C for 10 minutes while PVA was migrated to give a PVA-impregnated sheet. Then, the PVA-impregnated sheet obtained as described above was immersed in trichlorethylene, and squeezed and compressed with a mangle ten times to dissolve and remove the sea component and compress the PVA-impregnated sheet. In this way, a sea-deprived PVA-impregnated sheet including PVA-impregnated ultrafine fiber bundles entangled with one another was obtained.

The compressed sea-deprived PVA-impregnated sheet obtained as described above was impregnated with a DMF solution of polyurethane adjusted to have a solid content concentration of 12% by mass, squeezed at a target amount of the solid content to the fiber component of 30% by mass, and polyurethane was coagulated in an aqueous solution having a DMF concentration of 30% by mass. Then, PVA and DMF were removed with hot water, and the sheet was dried with hot air at a temperature of 120°C for 10 minutes to give a polyurethane-impregnated sheet having a thickness of 1.7 mm.

The polyurethane-impregnated sheet obtained as described above was half-cut in the thickness direction, and then ground with endless sandpaper to give a napped sheet having a thickness of 0.46 mm.

The napped sheet obtained as described above was dyed black under a temperature condition of 120°C using a jet dyeing machine and dried using a dryer to give a skin sheet having an average fiber diameter of ultrafine fibers of 3.1 µm, a basis weight of 170 g/m², and a thickness of 0.5 mm.

### <Addition of flame-retarding agent>

Coating processing of applying, as a flame retardant component, a flame-retarding agent containing 70% by mass of silicon oxide resin-treated ammonium polyphosphate (manufactured by Wellchem, phosphorus content: 28%, nitrogen content: 14%) to one surface of the skin sheet using a screen coater was performed. Then, drying treatment was performed at a temperature of 100°C for 7 minutes to give a flame retardant-containing skin sheet having a dry adhesion amount of the flame retardant-containing resin to the mass of the skin sheet of 25% by mass.

### <Production of woven or knitted fabric>

Polyethylene terephthalate (PET) having an intrinsic viscosity (IV) of 0.680 was spun and stretched, and then composite fibers (110 dtex/48 filaments) were obtained. The composite fibers were false-twisted, and then formed into a satin stitch fabric of 170 g/m² using a 28 gauge single tricot machine. The satin stitch fabric was dip-dyed black, and one surface of the fabric was ground with endless sandpaper to give a napped knitted fabric having a thickness of 0.64 mm and a basis weight of 210 g/m².

### <Addition of adhesive and sticking of skin sheet to woven or knitted fabric>

As an adhesive, a nylon resin (softening temperature: 90°C) composed of a single component of toluenesulfonamide was applied in an amount of 20 g/m² to the napped surface of the napped knitted fabric in a dot pattern using a gravure roll coater, and then dried with hot air at a temperature of 100°C to give a napped knitted fabric with adhesive. The back surface of the skin sheet including the flame retardant-containing resin layer (the surface on the side reverse to the napped surface) was joined with the adhesive-applied surface of the napped knitted fabric with adhesive, and then the resulting product was thermocompression-bonded with heat rolls (the heat roll on the woven fabric side was heated to a temperature of 150°C) to give a composite sheet product having a basis weight of 440 g/m² and a thickness of 1.1 mm. The obtained composite sheet product had a good surface appearance and a soft touch, and also had both high flame-retardant performance and high sticking performance. The results are shown in Table 1.

### [Example 2]

### <Production of skin sheet - addition of flame-retarding agent>

A flame retardant-containing skin sheet was obtained in the same manner as in Example 1.

### <Production of woven or knitted fabric>

A satin stitch fabric of 170 g/m² obtained in the same manner as in Example 1 was dip-dyed black, and one surface of the fabric was compressed so that the fabric might have ruggedness using an embossing roll having an ruggedness pattern with a depth of 200 µm and a width between the recessed portion and the convex portion of 100 µm at an embossing roll temperature of 160°C and a receiving roll temperature of 150°C to give an ruggedd knitted fabric having a convex portion thickness of 0.64 mm and a basis weight of 220 g/m².

### <Addition of adhesive and sticking of skin sheet to woven or knitted fabric>

A composite sheet product having a basis weight of 450 g/m² and a thickness of 1.1 mm was obtained in the same manner as in Example 1 except that the above-mentioned ruggedd woven fabric was used. The obtained composite sheet product had a good surface appearance and a soft touch, and also had high flame-retardant performance and high sticking performance. The results are shown in Table 1.

### [Example 3]

### <Production of skin sheet - addition of flame-retarding agent>

A flame retardant-containing skin sheet was obtained in the same manner as in Example 1.

### <Production of woven or knitted fabric>

A knitted fabric having a convex portion thickness of 0.64 mm and a basis weight of 220 g/m² was obtained in the same manner as in Example 1 except that the one surface was not subjected to nap raising.

### <Addition of adhesive and sticking of skin sheet to woven or knitted fabric>

A composite sheet product having a basis weight of 450 g/m² and a thickness of 1.1 mm was obtained in the same manner as in Example 1 except that the above-mentioned woven fabric was used. The obtained composite sheet product had a good surface appearance and a soft touch, and also had high flame-retardant performance and high sticking performance. The results are shown in Table 1.

### [Example 4]

### <Production of skin sheet>

A skin sheet having a diameter of 3.1 µm, a basis weight of 170 g/m², and a thickness of 0.5 mm was obtained.

### <Addition of flame-retarding agent>

A flame retardant-containing skin sheet was obtained in the same manner as in Example 1 except that an inorganic flame retardant containing aluminum hydroxide was used as the flame retardant component.

### <Production of woven or knitted fabric - sticking of skin sheet to woven or knitted fabric>

A composite sheet product having a basis weight of 440 g/m² and a thickness of 1.1 mm was obtained in the same manner as in Example 1 except that the above-mentioned flame retardant-containing skin sheet was used. The obtained composite sheet product had a good surface appearance and a soft touch, and also had high flame-retardant performance and high sticking performance. The results are shown in Table 1.

### [Example 5]

### <Production of skin sheet>

A skin sheet having an average monofilament diameter of ultrafine fibers of 3.1 µm, a basis weight of 170 g/m², and a thickness of 0.5 mm was obtained in the same manner as in Example 1.

### <Addition of flame-retarding agent>

A flame retardant-containing skin sheet was obtained in the same manner as in Example 1 except that a halogen flame retardant containing decabromodiphenyl ether was used as the flame retardant component.

### <Production of woven or knitted fabric - sticking of skin sheet to woven or knitted fabric>

A composite sheet product having a basis weight of 440 g/m² and a thickness of 1.1 mm was obtained in the same manner as in Example 1 except that the above-mentioned flame retardant-containing skin sheet was used. The obtained composite sheet product had a good surface appearance and a soft touch, and also had high flame-retardant performance and high sticking performance, although generation of a toxic halogen gas was observed during burning. The results are shown in Table 1.

### [Example 6]

### <Production of skin sheet>

Using polyethylene terephthalate (PET) having an intrinsic viscosity (IV) of 0.718 as an island component, polystyrene having an MFR of 18 as a sea component, and an islands-in-the-sea composite spinneret having a number of islands of 16 islands/hole, and at a spinning temperature of 285°C and at an island component/sea component mass ratio of 80/20, the components were melt-spun and then stretched. Using a push-fit crimping machine, the product was subjected to crimping treatment, and then cut into a length of 51 mm to give raw staple fiber of islands-in-the-sea fibers having a monofilament fineness of 3.8 dtex.

A skin sheet having an average fiber diameter of ultrafine fibers of 4.4 µm, a basis weight of 170 g/m², and a thickness of 0.5 mm was obtained in the same manner as in Example 1 except that the above-mentioned raw staple fiber was used.

### <Addition of flame-retarding agent - sticking of skin sheet to woven or knitted fabric>

A composite sheet product having a basis weight of 440 g/m² and a thickness of 1.1 mm was obtained in the same manner as in Example 1 except that the above-mentioned skin sheet was used. The obtained composite sheet product had a good surface appearance although slightly inferior to that in Example 1 and a soft touch, and also had both high flame-retardant performance and high sticking performance. The results are shown in Table 1.

### [Example 7]

### <Production of skin sheet>

Using polyethylene terephthalate (PET) having an intrinsic viscosity (IV) of 0.718 as an island component, polystyrene having an MFR of 18 as a sea component, and an islands-in-the-sea composite spinneret having a number of islands of 100 islands/hole, and at a spinning temperature of 285°C and at an island component/sea component mass ratio of 30/70, the components were melt-spun and then stretched. Using a push-fit crimping machine, the product was subjected to crimping treatment, and then cut into a length of 51 mm to give raw staple fiber of islands-in-the-sea fibers having a monofilament fineness of 2.5 dtex.

A skin sheet having an average fiber diameter of ultrafine fibers of 0.8 µm, a basis weight of 170 g/m², and a thickness of 0.5 mm was obtained in the same manner as in Example 1 except that the above-mentioned raw staple fiber was used.

### <Addition of flame-retarding agent - sticking of skin sheet to woven or knitted fabric>

A composite sheet product having a basis weight of 440 g/m² and a thickness of 1.1 mm was obtained in the same manner as in Example 1 except that the above-mentioned skin sheet was used. The obtained composite sheet product had a good surface appearance and a soft touch, and also had both high flame-retardant performance and high sticking performance. The results are shown in Table 1.

### [Example 8]

### <Production of skin sheet>

Using polyethylene terephthalate (PET) having an intrinsic viscosity (IV) of 0.718 as an island component, polystyrene having an MFR of 18 as a sea component, and an islands-in-the-sea composite spinneret having a number of islands of 8 islands/hole, and at a spinning temperature of 285°C and at an island component/sea component mass ratio of 90/10, the components were melt-spun and then stretched. Using a push-fit crimping machine, the product was subjected to crimping treatment, and then cut into a length of 51 mm to give raw staple fiber of islands-in-the-sea fibers having a monofilament fineness of 5.4 dtex.

A skin sheet having an average fiber diameter of ultrafine fibers of 7.5 µm and a basis weight of 170 g/m² was obtained in the same manner as in Example 1 except that the above-mentioned raw staple fiber was used.

### <Addition of flame-retarding agent - sticking of skin sheet to woven or knitted fabric>

A composite sheet product having a basis weight of 440 g/m² and a thickness of 1.1 mm was obtained in the same manner as in Example 1 except that the above-mentioned skin sheet was used. The obtained composite sheet product had a good surface appearance although slightly inferior to that in Example 1 and a soft touch, and also had both high flame-retardant performance and high sticking performance. The results are shown in Table 2.

### [Example 9]

### <Production of skin sheet - production of woven or knitted fabric>

A flame retardant-containing skin sheet and a napped knitted fabric were obtained in the same manner as in Example 1.

### <Addition of adhesive and sticking of skin sheet to woven or knitted fabric>

A composite sheet product having a basis weight of 440 g/m² and a thickness of 1.1 mm was obtained in the same manner as in Example 1 except that an acrylic resin (softening point: 75°C) composed of a single component of polymethyl methacrylate was used as the adhesive. The obtained composite sheet product had a good surface appearance and a soft touch, and also had both high flame-retardant performance and high sticking performance. The results are shown in Table 2.

### [Example 10]

### <Production of skin sheet - production of woven or knitted fabric>

A flame retardant-containing skin sheet and a napped knitted fabric were obtained in the same manner as in Example 1.

### <Addition of adhesive and sticking of skin sheet to woven or knitted fabric>

A composite sheet product having a basis weight of 440 g/m² and a thickness of 1.1 mm was obtained in the same manner as in Example 1 except that a polyurethane resin (Hi-Bon YA-180-1 (manufactured by Hitachi Chemical Company, Ltd.)) was used as the adhesive. The obtained composite sheet product had a good surface appearance and a soft touch, and also had both high flame-retardant performance and high sticking performance. The results are shown in Table 2.

### [Example 11]

### <Production of skin sheet - production of woven or knitted fabric>

A flame retardant-containing skin sheet and a knitted fabric were obtained in the same manner as in Example 3.

### <Addition of adhesive and sticking of skin sheet to woven or knitted fabric>

A composite sheet product having a basis weight of 440 g/m² and a thickness of 1.1 mm was obtained in the same manner as in Example 3 except that a polyurethane resin (Hi-Bon YA-180-1 (manufactured by Hitachi Chemical Company, Ltd.)) was used as the adhesive. The obtained composite sheet product had a good surface appearance and a soft touch, and also had both high flame-retardant performance and high sticking performance. The results are shown in Table 2.

### [Comparative Example 1]

### <Production of skin sheet>

A skin sheet having a basis weight of 170 g/m² and a thickness of 0.5 mm was obtained in the same manner as in Example 1.

### <Production of woven or knitted fabric>

A napped knitted fabric having a thickness of 0.64 mm and a basis weight of 210 g/m² was obtained in the same manner as in Example 1.

### <Addition of adhesive and sticking of skin sheet to woven or knitted fabric>

A laminated sheet product having a basis weight of 400 g/m² and a thickness of 1.0 mm was obtained in the same manner as in Example 1 except that no flame-retarding agent was added to the back surface of the skin sheet.

### <Addition of flame-retarding agent>

Coating processing of applying a flame-retarding agent obtained in the same manner as in Example 1 to the back surface of the laminated sheet product (the surface on the knitted fabric side) using a screen coater in the same amount as in Example 1 was performed, and then the product was subjected to drying treatment at a temperature of 100°C for 7 minutes to give a composite sheet product having a basis weight of 440 g/m² and a thickness of 1.1 mm. The obtained composite sheet product had a good surface appearance and a soft touch, and had high sticking performance, but was burned down in the burning test and was poor in the flame-retardant performance. The results are shown in Table 2.

### [Comparative Example 2]

### <Production of skin sheet>

A skin sheet having a basis weight of 170 g/m² and a thickness of 0.5 mm was obtained in the same manner as in Example 1.

### <Addition of flame-retarding agent>

A flame retardant-containing skin sheet was obtained using, as a flame-retarding agent, a phosphorus flame retardant containing guanidine phosphate as a main component (manufactured by DAIKYO CHEMICAL CO., LTD.), and adding the flame-retarding agent by a pad dry system so that the amount of the flame-retarding agent might be the same as in Example 1.

### <Production of woven or knitted fabric - sticking of skin sheet to woven or knitted fabric>

A composite sheet product having a basis weight of 440 g/m² and a thickness of 1.1 mm was obtained in the same manner as in Example 1 except that the above-mentioned flame retardant-containing skin sheet was used. The obtained composite sheet product had a soft touch and also had high flame-retardant performance and high sticking performance, but was sticky and had a poor surface appearance. The results are shown in Table 2.

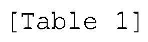

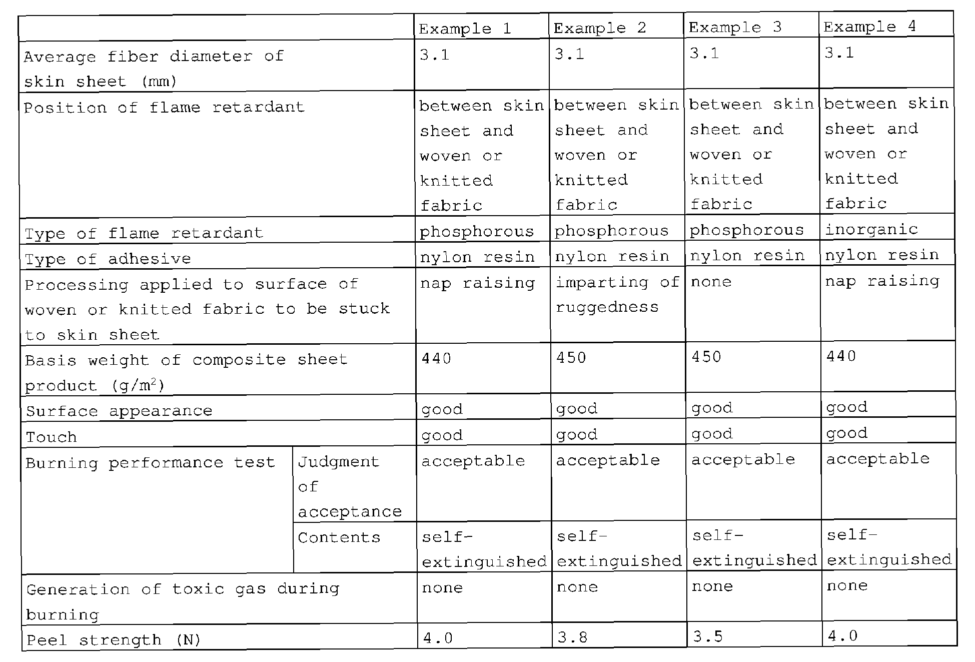

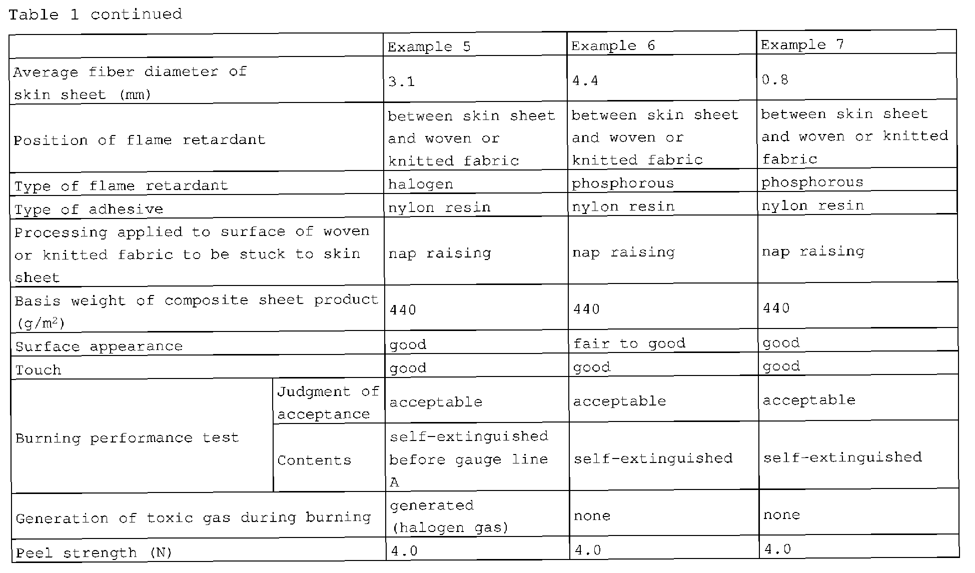

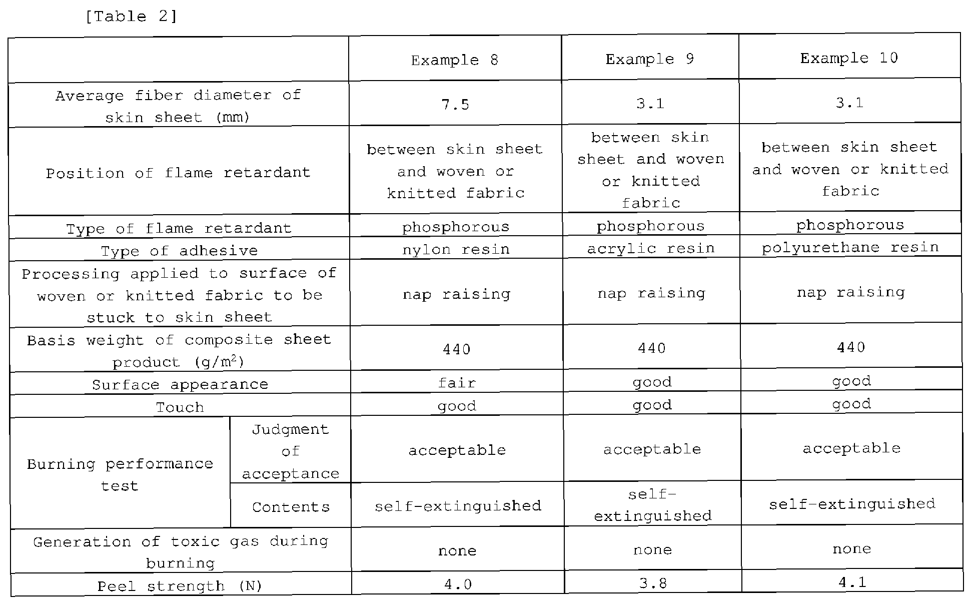

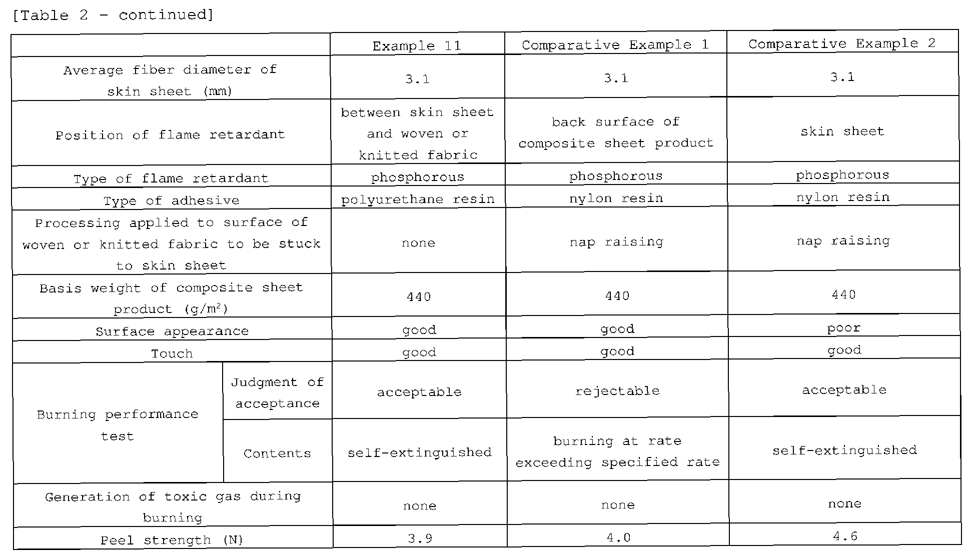

## Claims

1. A composite sheet product **characterised by**: a skin sheet including ultrafine fibers having an average fiber diameter of 0.1 to 10 µm and an elastomer, and a woven or knitted fabric, wherein the skin sheet and the woven or knitted fabric are laminated on each other with a resin layer containing a flame retardant and an adhesive layer interposed therebetween.

2. The composite sheet product according to claim 1, wherein the woven or knitted fabric has nap or ruggedness on a surface thereof that is in contact with the adhesive layer.

3. The composite sheet product according to claim 1 or 2, wherein the flame retardant is a phosphorus and/or inorganic flame retardant.

4. The composite sheet product according to any one of claims 1 to 3, wherein an adhesive in the adhesive layer is a thermoplastic resin having a softening temperature of 70 to 160°C.

5. The composite sheet product according to claim 4, wherein the thermoplastic resin is a nylon resin.

6. A method for manufacturing a composite sheet product, the method comprising the following steps 1 to 3:
1. adding a resin containing a flame retardant to a skin sheet including ultrafine fibers having an average fiber diameter of 0.1 to 10 µm and an elastomer;
2. imparting nap or ruggedness to at least one surface of a woven or knitted fabric; and
3. sticking, with an adhesive, a surface of the skin sheet obtained in step 1, the surface having the resin containing the flame retardant, to the surface of the woven or knitted fabric obtained in step 2, the surface having nap or ruggedness.

## Patentansprüche

1. Verbundfolienprodukt, das durch Folgendes gekennzeichnet ist: eine Außenfolie, einschließlich ultrafeiner Fasern, die einen durchschnittlichen Faserdurchmesser von 0,1 bis 10 µm aufweisen, und eines Elastomers, und einen Web- oder Strickstoff, wobei die Außenfolie und der Web- oder Strickstoff mit einer Harzschicht aufeinander laminiert sind, die ein flammhemmendes Mittel und eine dazwischen angeordnete Haftschicht enthält.

2. Verbundfolienprodukt nach Anspruch 1, wobei der Web- oder Strickstoff Noppen oder Rauheit auf einer Oberfläche davon aufweist, die mit der Haftschicht in Kontakt steht.

3. Verbundfolienprodukt nach Anspruch 1 oder 2, wobei das flammhemmende Mittel ein flammhemmendes Phosphor- und/oder anorganisches Mittel ist.

4. Verbundfolienprodukt nach einem der Ansprüche 1 bis 3, wobei ein Haftmittel in der Haftschicht ein thermoplastisches Harz mit einer Erweichungstemperatur von 70 bis 160 °C ist.

5. Verbundfolienprodukt nach Anspruch 4, wobei das thermoplastische Harz ein Nylonharz ist.

6. Verfahren zur Herstellung eines Verbundfolienprodukts, wobei das Verfahren die folgenden Schritte 1 bis 3 umfasst:
1. Zusetzen eines Harzes, das ein flammhemmendes Mittel enthält, zu einer Außenfolie, einschließlich ultrafeiner Fasern, die einen durchschnittlichen Faserdurchmesser von 0,1 bis 10 µm aufweisen, und eines Elastomers;
2. Erzeugen von Noppen oder Rauheit auf zumindest einer Oberfläche eines Web- oder Strickstoffs; und
3. Verkleben mit einem Haftmittel einer Oberfläche der in Schritt 1 erhaltenen Außenfolie, wobei die Oberfläche das Harz aufweist, das das flammhemmende Mittel enthält, mit der Oberfläche des in Schritt 2 erhaltenen Web- oder Strickstoffs, wobei die Oberfläche Noppen oder Rauheit aufweist.

## Revendications

1. Produit composite en feuille **caractérisé par** : une feuille de peau comprenant des fibres ultrafines ayant un diamètre moyen de fibre de 0,1 à 10 µm et un élastomère, et un tissu tissé ou tricoté, dans lequel la feuille de peau et le tissu tissé ou tricoté sont stratifiés l'un sur l'autre avec une couche de résine contenant un retardateur de flamme et une couche adhésive interposées entre eux.

2. Produit composite en feuille selon la revendication 1, dans lequel le tissu tissé ou tricoté présente un duvet ou une rugosité sur une surface de celui-ci qui est en contact avec la couche adhésive.

3. Produit composite en feuille selon la revendication 1 ou 2, dans lequel le retardateur de flamme est un retardateur de flamme phosphoré et/ou inorganique.

4. Produit composite en feuille selon l'une quelconque des revendications 1 à 3, dans lequel un adhésif dans la couche adhésive est une résine thermoplastique ayant une température de ramollissement de 70 à 160°C.

5. Produit composite en feuille selon la revendication 4,
dans lequel la résine thermoplastique est une résine de nylon.

6. Procédé de fabrication d'un produit composite en feuille, le procédé comprenant les étapes 1 à 3 suivantes consistant à :
1. ajouter une résine contenant un retardateur de flamme à une feuille de peau comprenant des fibres ultrafines ayant un diamètre moyen de fibre de 0,1 à 10 µm et un élastomère ;
2. conférer un duvet ou une rugosité à au moins une surface d'un tissu tissé ou tricoté ; et
3. coller, à l'aide d'un adhésif, une surface de la feuille de peau obtenue à l'étape 1, la surface ayant la résine contenant le retardateur de flamme, à la surface du tissu tissé ou tricoté obtenu à l'étape 2, la surface présentant un duvet ou une rugosité.
